# EUROPEAN PATENT SPECIFICATION

(11) **EP 1 679 856 B1**
(45) Date of publication and mention of the grant of the patent: **12.08.2015**
(21) Application number: 05112433.7
(22) Date of filing: 19.12.2005
(51) Int. Cl.: H04L 12/70, H04L 29/12

(54) **Method of constructing a unique multicast address by a server.**
Verfahren zum Aufbau einer einzigen Multicast-Addresse in einem Server
Méthode de construction d'une adresse de multi-diffusion unique par un serveur

(30) Priority: 10.01.2005 FR 0550079
(43) Date of publication of application: 12.07.2006
(73) Proprietor: Thomson Licensing SA, 92130 Issy-les-Moulineaux (FR)
(72) Inventor: Champel, Mary-Luc, 35220, Marpiré (FR); Fleury, Jean-François M., 56670, Riantec (FR)
(74) Representative: Le Dantec, Claude

(56) References cited:
- US-A1- 2002 003 780
- US-A1- 2004 122 980
- SAVOLA CSC/FUNET B HABERMAN JHU APL P: "Embedding the Rendezvous Point (RP) Address in an IPv6 Multicast Address" IETF STANDARD, INTERNET ENGINEERING TASK FORCE, IETF, CH, November 2004 (2004-11), XP015009728 ISSN: 0000-0003
- KOBAYASHI COMMUNICATION RESEARCH LABORATORY A OGAWA KEIO UNIVERSITY S CASNER PACKET DESIGN C BORMANN UNIVERSITAET BREMEN TZI K: "RTP Payload Format for DV (IEC 61834) Video" IETF STANDARD, INTERNET ENGINEERING TASK FORCE, IETF, CH, January 2002 (2002-01), XP015008970 ISSN: 0000-0003

## Description

The present invention relates to the field of digital data stream transmission on an IP network and, more particularly, the way in which an audio/video stream server will choose unique multicast addresses on the network.

On IP networks; there are various ways of transmitting data to a number of users. The means most commonly used in the context of the transmission of digital services, for example audiovisual, is a so-called multicast mode. In this mode, a server will send the data packets corresponding to the service to a "virtual" address called a multicast address. This address is virtual in that it does not correspond to the IP address of a destination machine of the data packets. In practice, a machine wishing to receive the stream of data sent will subscribe to the multicast. To do this, it will use the IGMP protocol ("Internet Group Management Protocol"). It will send a "join" command with the multicast address, this command will be transmitted from router to router within the network until it reaches a router already relaying this stream or directly connected to the server. Once the source, or a point of the transmission is reached, the intermediate routers between this point and the machine wishing to receive the stream will be configured to transmit this stream from the server to the destination machine

It can therefore be seen that this multicast protocol uses addresses that are virtual inasmuch as they do not represent physical machines. An address space is thus reserved for this purpose, comprising the addresses from 224.0.0.0 to 239.255.255.255. These addresses correspond to the addresses for which the first 4 bits are "1110".

Document US 2002/003780 A1 (Braun David & Al) discloses an extension of the Routing Information Protocol (RIP) to include a network-wide unique interface identifier.

A working group ("Multicast Address Allocation") of the IETF ("Internet Engineering Task Force") is working on resolving the problem of allocating multicast addresses. In practice, the servers wishing to transmit data streams must choose an address and a port for this transmission. This address must be located in the space reserved for this purpose and must not collide with another address that would be chosen by another server. The IETF proposal is based on one or more multicast address allocation servers. A stream server requiring an address for a new transmission will therefore contact one of these address servers to obtain this address. The management of the pool of reserved addresses and any coordination between servers are also managed.

This proposal, although quite functional, is relatively clumsy to implement. In the context of local area networks, home networks for example, local servers will distribute audio/video streams over IP. These streams are normally obtained from satellite or cable transmission and are retransmitted either directly or after storage. When such a device needs to transmit an audio/video stream, it must choose a multicast address to use for this transmission. It would be sensible to be able to put in place a less clumsy multicast address allocation or construction mechanism requiring neither hardware nor particular configuration, but ensuring the uniqueness within the local area network of the duly constructed addresses. Also, the clients need to know these addresses.

The invention provides a solution to the allocation of multicast addresses within a local area network by stream servers, in particular audio/video. This solution involves neither configuration nor particular servers. The invention relies on the use of identifiers of the transmitted stream for constructing the multicast address. Also, this method enables the transmission client to know the duly constructed multicast address to subscribe to a stream.

The invention relates to a method of construction, by a data stream server for a communication network, of a multicast address and/or the associated port number for the transmission of a data stream. This method includes at least the following step:
- determination of at least a part of the multicast address and/or the associated port number according to at least one identifier of the data to be transmitted to this address.

According to a particular embodiment of the invention, the determination step uses all or part of at least one identifier of the stream to determine the bits of the multicast address and/or the constructed associated port number.

According to a particular embodiment of the invention, the network being an IP local area network running at IP version 6, the determination step uses the at least one identifier of the stream for determining the bits of the group identifier of the constructed multicast address.

According to a particular embodiment of the invention, the identifier is the unique identifier of the stream in the network.

The invention also relates to a data stream server in multicast mode within a communication network having:
- means of connection to the network;
- means of transmitting data streams in multicast mode on this IP local area network;
- means of constructing a multicast address and/or the associated port number according to at least one identifier of the data to be transmitted.

The invention will be better understood, and other features and advantages will become apparent from reading the description that follows, the description referring to the appended drawings, in which:
Figure 1 represents the address spaces recommended for private networks.
Figure 2 represents the structure of an IPV6 (IP version 6) multicast address.
Figure 3 represents examples of multicast address construction according to construction schemes according to the invention.
Figure 4 represents an example of architecture for a server according to the exemplary embodiment of the invention.

On packet data networks, such as, for example, the Internet, IP local area networks or others, there are various ways of transferring information. These ways can be classified in three categories according to the number of senders and receivers involved in this transmission. First, there is unicast transmission, whereby a sender can send an information packet to a single receiver identified by its address in the network. This is the transmission mode used by the most popular protocols of the Internet such as the HTTP (Hyper Text Transfer Protocol) protocol for transferring web pages or the file transfer protocol FTP. Another transmission mode consists, for a sender, in transmitting a packet in broadcast mode. In this mode, the packet sent by the sender is sent to all the nodes of the network. This mode is not available on the Internet but is found on local area networks. The third mode consists, for a sender or a group of senders, in transmitting a packet to a group of receivers, in a multicast mode. In this mode, the packets are sent to a so-called multicast address and will be routed to all the recipients belonging to the transmission group. A client who joins a transmission group is said to subscribe to the group and a client who leaves the group is said to unsubscribe from the group.

The multicast mode is used in practice to save on intermediate bandwidth in the network when a source is sending data to a group of recipients. In practice, in this case, the use of a unicast mode requires the data to be sent as many times as there are recipients. This mode involves duplicating packets on parts of the network common to the paths between the source and the various recipients. On the other hand, the multicast enables the data to be sent only once, this data being duplicated on the routers of the network, according to the paths leading to the recipients belonging to the transmission group.

Within a local area network, for example a home network, it is increasingly commonplace to have servers for audiovisual or other content transmitted in data stream form. These streams are normally transmitted in multicast mode because this saves on bandwidth when the transmission is to a number of clients. This may apply in the home, for example for transmitting music to a number of rooms or enabling several members of the family to follow one and the same content in different rooms. Also worthy of mention is the combined recording and displaying of media. In all these uses, there are a number of clients, in the sense of devices receiving a content, within the home and therefore on the local area network.

On this local area network, a certain number of devices will therefore act as audio/video stream servers, preferably in multicast mode. Typical of these are digital video recorders, gateways receiving content by satellite or cable and distributing it over the home network, or any other device acting as a source of content on the local area network. All these devices will therefore, whenever they want to transmit content, need to choose a multicast address and port pairing. It is essential to ensure the uniqueness of this pairing so as to avoid collisions between different transmissions by devices on the local area network. A client wanting to connect to the transmission must know this address.

Non-collision with the multicast addresses of streams originating from a network external to the local area network but accessible to the clients of the local area network is not guaranteed by this mechanism. It may be a home network connected to an external media distribution network. A way of ensuring this non-collision is to implement an address translation in the gateway connecting the local area network and the distribution network. Since the gateway is an element of the local area network, the latter can adopt the rules described in the document for transmitting the streams that it receives from the external network and to clients internal to the local area network.

To avoid having to put in place and configure multicast address servers, this document proposes to use the characteristics of the stream to be transmitted to construct the multicast address and/or the port used for the stream transmission. In practice, the audio/video streams are normally identified uniquely. It is therefore possible to construct unique addresses and/or port numbers based on the stream identifiers. In this way, the uniqueness of the duly constructed addresses is ensured within the network and, on the other hand, a client using the same method will be able to construct the transmission address of a stream to which he wants to subscribe.

In RFC 2365, the IANA defined a multicast address space for private networks between 239.255.0.0 and 239.255.255.255. Because of this, the first 16 bits of the multicast addresses are fixed at 239.255. However, here too, failure to observe this recommendation, so long as there is no attempt to depart from the general multicast address space (224.0.0.0 to 239.255.255.255), will not cause any operating problems.

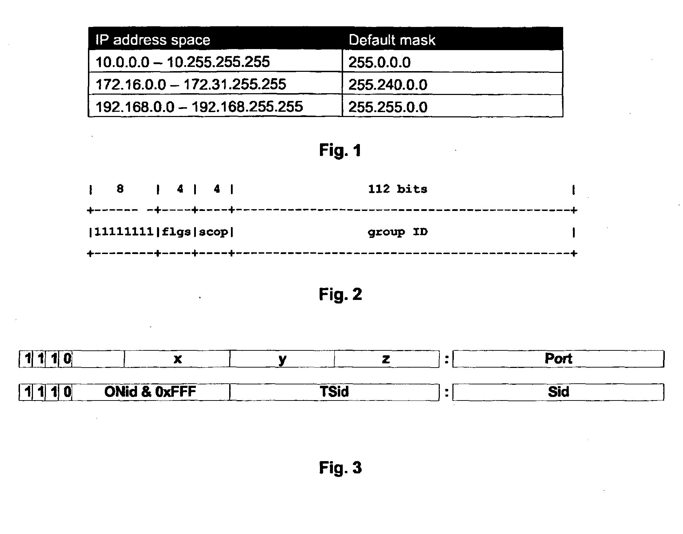

The IPV6 multicast addresses are defined in RFC 2373. Figure 2 describes the format of these addresses: a first field of eight 1 bits, a 4-bit "figs" field, a 4-bit "scop" field followed by a 112-bit group identifier. In a local area network, the "figs" value must be 1 whereas the "scop" value must be 2, indicating that the address is temporary and limited to the link.

It is worth noting that, in the IPV6 case, there can be no confusion between the multicast addresses external to the local area network and those that are defined on this network. In practice, the "figs" and "scope" fields of these addresses will be different.

The exemplary embodiment of the invention is situated in the context of the transmission of audio/video streams in DVB (Digital Video Broadcast) format. This standard defines a set of three identifiers of the stream known as the DVB triplet. A definition of this triplet can be found in the document: "Digital Video Broadcasting (DVB); Specification for Service Information (SI) in DVB systems; EN 300 468 v1.3.1)". This triplet comprises a network identifier (ONid, for Original Network ID) present in the NIT (Network Information Table), encoded on 16 bits, a transport stream identifier (TSid) present in the SDT (Stream Description Table) encoded on 16 bits and a service identifier (Sid) also coded on 16 bits. This triplet is used to uniquely identify a service transmitted on a DVB network. In practice, the network is defined as a collection of MPEG-2 transport stream multiplexes transmitted by one and the same distribution system uniquely identified by its ONid. The transport stream is defined as the basic DVB structure for transporting services identified uniquely by the TSid within the network. The service is a sequence of programs under the control of a broadcaster and suitable for transmission within a programming identified uniquely by its Sid within the transport stream.

When a DVB stream needs to be distributed over an IP network by a server, the latter must obtain a multicast address for this distribution. This address must be unique on the local area network, with different servers needing to safeguard against the risk of using the same address for two different streams. Because of the definition of the identifiers of the stream described previously, these identifiers uniquely identify the stream concerned. It is therefore possible to use this uniqueness of the identifiers to construct addresses and/or port numbers inheriting this property of uniqueness. It is therefore proposed to use these identifiers to construct the multicast address and/or the port number.

Also, since the method of constructing the multicast address and/or the port number is known, it can also be used by the client. Provided that the latter knows the stream that he wants to receive and therefore the identifiers concerned, he can apply the method to determine the transmission address to which he needs to subscribe to receive this stream.

In IPV4, the format of the multicast addresses, fixing the first 4 bits at "1110", leaves us 28 free bits to which must be added the 16 bits of the port number, giving 44 bits. The 3 identifiers define values over a set of 48 bits (3 * 16). It can therefore be seen that it is not possible to establish a direct correlation between the 48 bits of the identifiers and the 44 free bits that are available for the multicast address. It is possible to resolve the problem by deciding to take account only of the 12 lowest order bits of the network identifier. This presupposes that the number of DVB networks carried over the same physical networks does not exceed 4096 and that the network identifiers are incremented in steps of 1 from 0. This assumption is more than borne out in practice by the real deployments of today.

Figure 3 proposes a correlation enabling the multicast address and port number pairing to be constructed from the DVB triplet. It proposes a direct correlation between the port number and the Sid, the 2 low order bytes of the address corresponding to the TSid whereas the 12 low order bits of the ONid are made to correspond to the 12 low order bits of the 2 high order bytes of the multicast address. Obviously this correlation is merely an example and any correlation is possible. Similarly, functions for giving the free bits of the address/port number pairing that are not a bit-for-bit correlation can be used.

In the case of an IP version 6 network, the format of the multicast addresses (Figure 2) leaves the 112-bit group identifier field free. The same method can therefore be used as that employed for IP version 4. Here, it is possible to use complete bit-for-bit correlations between the 3 identifiers of the stream and 48 bits chosen from the 112. Similarly, it is also possible to use functions for giving the free bits of the address/port number pairing that are not a bit-for-bit correlation.

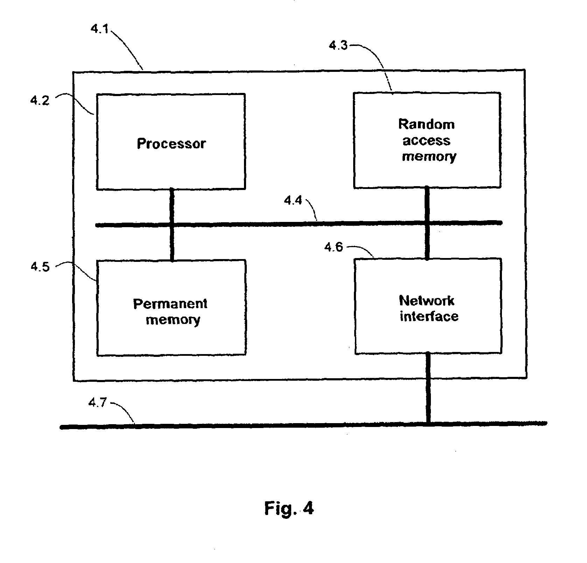

Figure 4 represents a typical general architecture of a server, referenced 4.1, intended to implement the method. Such a device includes a network interface, referenced 4.6, intended to connect the device to the IP network referenced 4.7. It also includes a permanent memory, referenced 4.5, intended to store the programs needed to execute the method, including the stack managing IP communication, the network interface management layer and the programs managing the construction of the multicast addresses according to the method described. These programs will be loaded into the random access memory, referenced 4.3, for execution by the central processor referenced 4.2. All these elements will be interlinked via a communication bus referenced 4.4. It is obvious to a person skilled in the art that this architecture can vary in how these means are arranged and is simply an example of architecture of a server capable of implementing the method.

The method described herein directly reuses the identifiers of the stream to construct the corresponding part of the multicast address. It is obvious that any use of these identifiers in constructing the multicast address will similarly ensure the required uniqueness. As a matter of fact, the invention relies on the use of at least some of these identifiers, and their property of uniqueness, to construct unique address and port number pairings used for multicasts on the local area network without requiring the intervention of a server managing the assignment of the addresses.

## Claims

1. Method of construction, by a data stream server (4.1) for a local area network (4.7), of a unique IP multicast transmission address and/or an associated port number ("port") for the transmission of a data stream, **characterized in that** the method includes at least the following step:
- construction of at least a part of the unique IP multicast transmission address and/or the associated port number according to a unique identifier of the data stream to be transmitted to this address, said unique identifier being present in the data stream.

2. Method according to Claim 1, **characterized in that** the construction step uses all or part of the unique identifier of the data stream to construct bits of the unique IP multicast transmission address and/or the associated port number.

3. Method according to Claim 1, the local area network being an IP local area network running at IP version 6, **characterized in that** the construction step uses the unique identifier of the data stream for constructing bits of a group identifier of the unique IP multicast transmission address.

4. Method according to one of Claims 1 to 3, **characterized in that** the unique identifier is the unique identifier of the data stream in the local area network.

5. Data stream server in multicast mode within a local area network (4.7) having:
- means of connection (4.6) to the local area network;
- means of transmitting a data stream in multicast mode on the local area network;
**characterized in that** it also includes:
- means of constructing a unique IP multicast address and/or an associated port number ("port") according to a unique identifier of the data stream to be transmitted, said unique identifier being present in the data stream.

6. Server according to Claim 5, **characterized in that** the unique identifier is the unique identifier of the data stream in the local area network.

7. Method according to one of Claims 1 to 4, comprising a construction of a unique IP multicast transmission address for the transmission of a data stream, **characterized in that** the method includes at least the following step:
- a construction of at least a part of the IP multicast address according to a unique identifier of the data stream to be transmitted to this address, said unique identifier being present in the data stream.

8. Method according to one of Claims 1 to 4 and 7, comprising a construction of an associated port number ("port") associated to a unique IP multicast transmission address for the transmission of a data stream, **characterized in that** the method includes at least the following step:
- a construction of the associated port number according to a unique identifier of the data stream to be transmitted to this address, said unique identifier being present in the data stream.

## Patentansprüche

1. Verfahren zur Konstruktion einer eindeutigen IP-Multicast-Sendeadresse und/oder einer zugeordneten Portnummer ("Port") für die Sendung eines Datenstroms durch einen Datenstromserver (4.1) für ein lokales Netz (4.7), **dadurch gekennzeichnet, dass** das Verfahren mindestens den folgenden Schritt enthält:
- Konstruktion mindestens eines Teils der eindeutigen IP-Multicast-Sendeadresse und/oder der zugeordneten Portnummer in Übereinstimmung mit einer eindeutigen Kennung des an diese Adresse zu sendenden Datenstroms, wobei die eindeutige Kennung in dem Datenstrom vorhanden ist.

2. Verfahren nach Anspruch 1, **dadurch gekennzeichnet, dass** der Konstruktionsschritt die gesamte eindeutige Kennung des Datenstroms oder einen Teil davon verwendet, um die Bits der IP-Multicast-Sendeadresse und/oder die zugeordnete Portnummer zu konstruieren.

3. Verfahren nach Anspruch 1, wobei das lokales Netz ein lokales IP-Netz ist das unter IP Version 6 arbeitet, **dadurch gekennzeichnet, dass** der Konstruktionsschritt die eindeutige Kennung des Datenstroms zum Konstruieren der Bits einer Gruppenkennung der eindeutigen IP-Multicast-Sendeadresse verwendet.

4. Verfahren nach einem der Ansprüche 1 bis 3, **dadurch gekennzeichnet, dass** die eindeutige Kennung die eindeutige Kennung des Datenstroms in dem lokales Netz ist.

5. Datenstromserver in einer Multicast-Betriebsart innerhalb eines lokalen Netzes (4.7), wobei der Datenstromserver Folgendes aufweist:
- ein Mittel zur Verbindung (4.6) mit dem lokales Netz;
- ein Mittel zum Senden von einem Datenstroms in der Multicast-Betriebsart in dem lokales Netz;
**dadurch gekennzeichnet, dass** er außerdem Folgendes enthält:
- ein Mittel zum Konstruieren einer eindeutigen IP-Multicast-Adresse und/oder einer zugeordneten Portnummer ("Port") in Übereinstimmung mit einer eindeutigen Kennung des zu sendenden Datenstroms, wobei die eindeutige Kennung in dem Datenstrom vorhanden ist.

6. Server nach Anspruch 5, **dadurch gekennzeichnet, dass** die eindeutige Kennung die eindeutige Kennung des Datenstroms in dem lokales Netz ist.

7. Verfahren nach einem der Ansprüche 1 bis 4, umfassend:
- Konstruktion einer eindeutigen IP-Multicast-Sende-adresse für die Sendung eines Datenstroms, **dadurch gekennzeichnet, dass** das Verfahren mindestens den folgenden Schritt enthält:
- Konstruktion mindestens eines Teils der eindeutigen IP-Multicast-Adresse in uebereinstimmung mit einer eindeutigen Kennung des an diese Adresse zu sendenden Datenstroms, wobei die eindeutige Kennung in dem Datenstrom vorhanden ist.

8. Verfahren nach einem der Ansprüche 1 bis 4 und 7, umfassend:
- Konstruktion einer Portnummer ("Port"), die einer eindeutigen IP-Multicast-Sendeadresse für die Sendung eines Datenstroms zugeordnet ist, **dadurch gekennzeichnet, dass** das Verfahren mindestens den folgenden Schritt enthält:
- Konstruktion der zugeordneten Portnummer in Übereinstimmung mit einer eindeutigen Kennung des an diese Adresse zu sendenden Datenstroms, wobei die eindeutige Kennung in dem Datenstrom vorhanden ist.

## Revendications

1. Procédé de construction, par un serveur de flux de données (4.1) pour un réseau local (4.7), d'une adresse IP unique de transmission multicast et/ou d'un numéro de port associé (« port » ) pour la transmission d'un flux de données, **caractérisé en ce que** le procédé inclut au moins l'étape suivante :
- construction d'au moins une partie de l'adresse IP unique de transmission multicast et/ou du numéro de port associé selon un identifiant unique du flux de données à être transmis à cette adresse, ledit identifiant unique étant présent dans le flux de données.

2. Procédé selon la revendication 1, **caractérisé en ce que** l'étape de construction utilise tout ou une partie de l'identifiant unique du flux de données pour construire des bits de l'adresse IP unique de transmission multicast et/ou le numéro de port associé.

3. Procédé selon la revendication 1, le réseau local étant un réseau local IP fonctionnant sous IP version 6, **caractérisé en ce que** l'étape de construction utilise l'identifiant unique du flux de données pour la construction des bits d'un l'identifiant de groupe de l'adresse IP unique de transmission multicast.

4. Procédé selon l'une des revendications 1 à 3, **caractérisé en ce que** l'identifiant unique est l'identifiant unique du flux de données dans le réseau local.

5. Serveur de flux de données en mode multicast dans un réseau local (4.7) disposant de :
- un moyen de connexion (4.6) au réseau local;
- un moyen de transmission d'un flux de données en mode multicast sur le réseau local;
**caractérisé en ce qu'**il comprend aussi :
- un moyen de construction d'une adresse IP unique multicast unique et/ou d'un numéro de port associé (« port ») selon un identifiant unique du flux de données à être transmis, ledit identifiant unique étant présent dans le flux de données.

6. Serveur selon la revendication 5, **caractérisé en ce que** l'identifiant unique est l'identifiant unique du flux de données dans le réseau local.

7. Procédé selon l'une des revendications 1 à 4, comprenant une construction d'une adresse IP unique de transmission multicast pour la transmission d'un flux de données, **caractérisé en ce que** le procédé comprend au moins l'étape suivante :
- construction d'au moins une partie de l'adresse IP unique de transmission multicast selon un identifiant unique du flux de données à être transmises à cette adresse, ledit identifiant unique étant présent dans le flux de données.

8. Procédé selon l'une des revendications 1 à 4 et 7, comprenant une construction d'un numéro de port (« port ») associé à une adresse IP unique de transmission multicast pour la transmission d'un flux de données, **caractérisé en ce que** le procédé comprend au moins l'étape suivante :
- une construction du numéro de port associé selon un identifiant unique du flux de données à être transmises à cette adresse, ledit identifiant unique étant présent dans le flux de données.
